# DEMANDE DE BREVET EUROPEEN

(11) **EP 0 853 438 A1**
(43) Date de publication de la demande: **15.07.1998**
(21) Numéro de dépôt: 98200015.0
(22) Date de dépôt: 06.01.1998
(51) Int. Cl.: H04Q 7/32

(54) **Station mobile de radiotéléphone comportant un système de protection pour au moins un numéro d'authentification et procédé de protection d'un numéro d'authentification**

(30) Priorité: 09.01.1997 FR 9700153
(71) Demandeur: Philips Electronics N.V., 5621 BA Eindhoven (NL)
(72) Inventeur: Pitiot, Yann, 75008 Paris (FR)
(74) Mandataire: Pyronnet, Jacques

(57) **Abrégé**

La station mobile comporte des moyens de Cryptage d'Identification et de Trafic (CIT), et une mémoire (54) pour mémoriser au moins un numéro d'authentification (A-key). Selon l'invention, le système de protection comporte un programme (61) pour crypter, lors de la mise en service, la A-key par les moyens CIT, et pour mémoriser (A1) la A-key cryptée, et un programme (62) pour décrypter, selon les moyens CIT la A-key lorsque son utilisation en clair est nécessaire dans la station mobile.

Application : sécurisation de radiotéléphones mobiles.

## Description

L'invention concerne une station mobile de radiotéléphone comportant des moyens de cryptage d'identification et de trafic, un système de protection pour au moins un numéro d'authentification, et des moyens de mémorisation pour mémoriser ledit numéro d'authentification.

L'invention concerne aussi un procédé de protection d'un numéro d'authentification contenu dans une station mobile de radiotéléhone du genre mentionné ci-dessus.

Une telle protection trouve d'importantes applications notamment dans le domaine de la radiotéléphonie mobile du genre AMPS (ou TACS et ETACS) et aussi du genre CDMA. Des numéros importants dans ce domaine sont, notamment, les numéros d'identification (ESN et MIN) des dispositifs qui peuvent se raccorder au réseau AMPS, numéros qui correspondent respectivement au numéro de série du dispositif et au numéro d'identification de ce dernier. Ces numéros sont la proie des pirates qui essayent de s'approprier un code qui ne leur appartient pas, de sorte que la facturation des communications soit imputée à un autre qu'à eux-mêmes.

Pour se protéger de ce genre de manoeuvres malhonnêtes, on connaît un système de protection qui est décrit en préambule du brevet des Etats-Unis d'Amérique No. 5,392,356. Selon ce système connu le ou les code(s) d'identification est (sont) crypté(s) dans la station mobile avant qu'ils soient inscrits dans l'EEPROM du mobile, les codes étant ensuite déchiffrés puis émis au moment de la communication. Un tel artifice empêche les codes d'identification d'être extraits de l'EEPROM par des moyens matériels et donc d'être acquis simplement.

Cependant, des codes d'identification tels que le MIN et l'ESN peuvent toujours être acquis par interception d'une communication entre la station mobile et la station de base, ce qui rend la fraude précitée toujours possible.

Pour conserver l'intégrité des stations mobiles et empêcher leur piratage on a été amené progressivement à introduire des procédures d'authentification plus sophistiquées au fur et à mesure que le piratage des mobiles augmentait. Désormais, dans de nombreux réseaux, un numéro d'authentification est affecté à chaque station mobile ; il s'agit de la clé d'authentification ou A-key, et un second numéro d'authentification, le SSD (Shared Secret Data en anglais), est calculé par cryptage à partir de la A-key.

Un but de la présente invention est d'empêcher la lecture par des moyens électroniques de clé(s) d'authentification contenue(s) dans une station mobile de radiotéléphonie.

Un autre but de l'invention est de fournir une station de mobile de radiotéléphone dont l'utilisation illégale soit empêchée.

Ces buts sont atteints et les inconvénients de l'art antérieur sont atténués grâce au fait que la station mobile de radiotéléphone définie au premier paragraphe est remarquable en ce que ledit système de protection comporte des moyens pour crypter, à la mise en service de la station mobile, ledit numéro d'authentification présenté en clair, par lesdits moyens de cryptage d'identification et de trafic, et pour le mémoriser sous cette seule forme cryptée dans lesdits moyens de mémorisation, et pour décrypter selon lesdits moyens de cryptage d'identification et de trafic ledit numéro d'authentification lorsque son utilisation en clair est nécessaire dans la station mobile.

Ainsi, une personne mal intentionnée qui arriverait à lire le contenu de l'EEPROM d'un mobile ainsi protégé et à isoler les clés d'authentification telle que la A-key et le SSD, sous forme codée, ne serait pas à même de décoder ces clés pour les introduire illégalement en clair dans une station mobile conventionnelle. Par ailleurs, les clés d'authentification ne sont utilisées que pour le cryptage et ne peuvent pas être émises par voie hertzienne, ce qui empêche totalement un tiers autre que le constructeur, ou l'opérateur et éventuellement l'abonné, d'y avoir accès.

On notera aussi que le cryptage et le décryptage des clés d'authentification par les moyens de cryptage déjà présents dans le système de transmission (mobile et base) simplifient les opérations et permettent d'obtenir la protection recherchée à peu de frais. En l'occurrence, le système de cryptage CAS est imposé par les normes régissant les réseaux ETACS et le système CAVE est utilisé quant à lui par les réseaux AMPS et CDMA.

La description qui suit, en regard des dessins annexés, le tout donné à titre d'exemple non limitatif fera bien comprendre comment l'invention peut être réalisée.

La figure 1 montre un dispositif conforme à l'invention.

La figure 2 est un schéma de cryptage d'un numéro d'authentification.

La figure 3 est un schéma de décryptage d'un numéro d'authentification.

La figure 4 représente la mise à jour, par cryptage à partir de la A-key, du numéro d'authentification SSD.

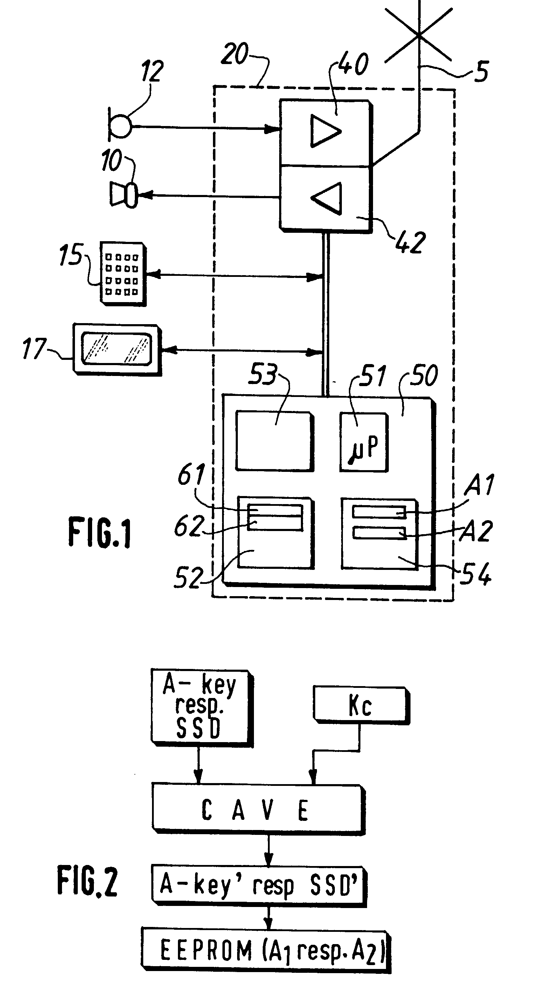

Le dispositif montré à la figure 1 est un poste radio-mobile (station mobile) destiné à être raccordé à un réseau du genre ETACS ou AMPS. Il se compose des éléments habituels à ce genre de dispositif, à savoir une antenne 5, un microphone 12, un écouteur 10, un clavier 15, un écran 17 et d'un ensemble électronique 20. Cet ensemble électronique comporte une partie émission 40 et une partie réception 42 qui permettent le trafic radioélectrique en utilisant l'antennne 5 et donc l'échange de parole en utilisant l'écouteur 10 et le microphone 12, sans oublier les échanges de signalisation qui sont impliqués par l'emploi du clavier 15. Tout cet ensemble électronique est régi par un ensemble de commande 50 formé à partir d'au moins un micro-calculateur 51 auquel sont rattachées, de manière usuelle, une mémoire programme 52 du type mémoire flash, une mémoire vive 53 et une mémoire inscriptible 54 du genre EEPROM. C'est dans cette mémoire 54 que différents numéros d'authentification peuvent être mémorisés. On s'intéressera surtout, dans la suite du présent mémoire, au numéro désigné par A-key qui est une clé qui permet à la station mobile de s'identifier comme étant unique par rapport à d'autres stations mobiles. Elle est confidentielle et ne doit être connue que de l'opérateur, respectivement du fabricant, et éventuellement de l'abonné, usager de la station mobile. Pour se protéger de manoeuvres frauduleuses telles que celles décrites dans le brevet américain précité No. 5,392,356 il convient de prendre des mesures pour s'assurer de l'intégrité de ce numéro.

Conformément à l'invention, pour s'assurer de l'intégrité du numéro A-key, celui-ci est introduit en clair dans la station mobile, lors de sa mise en service par une personne habilitée, l'opérateur de préférence, au même titre qu'il l'est dans la station de base. La mémoire programme 52 contient un programme 61 pour crypter au moins la A-key et pour l'introduire ainsi cryptée à un emplacement A1 dans la mémoire EEPROM 54. L'algorithme utilisé pour le cryptage est l'algorithme CAVE ou CAS selon le type de réseau de radiotéléphonie dont il s'agit, algorithme déjà utilisé à des fins de cryptage pour l'identification ou le trafic, comme cela est imposé par les normes qui régissent le fonctionnement des réseaux radioélectriques mobiles AMP et ETACS. L'algorithme CAVE est décrit dans l'appendice A de EIA/TIA (Electronics Industry Association/Telecommunications Industry Association) Interim Standard IS-54 révision B et, plus particulièrement, TR45.0.A, Common Cryptographic Algorithms, Révision B, 21 Juin 1995.

Le cryptage de la A-key s'effectue comme représenté à la figure 2.

La A-key est cryptée, par le programme 61, au moyen d'une clé constructeur Kc, par l'algorithme CAVE. Le résultat, A-key' est ensuite stocké à l'emplacement A1 de l'EEPROM 54 (figure 1). La clé constructeur Kc est secrète, n'étant pas contenue dans l'EEPROM 54 mais dans la mémoire programme 52 qui est inviolable, et n'étant pas transmise par voie hertzienne.

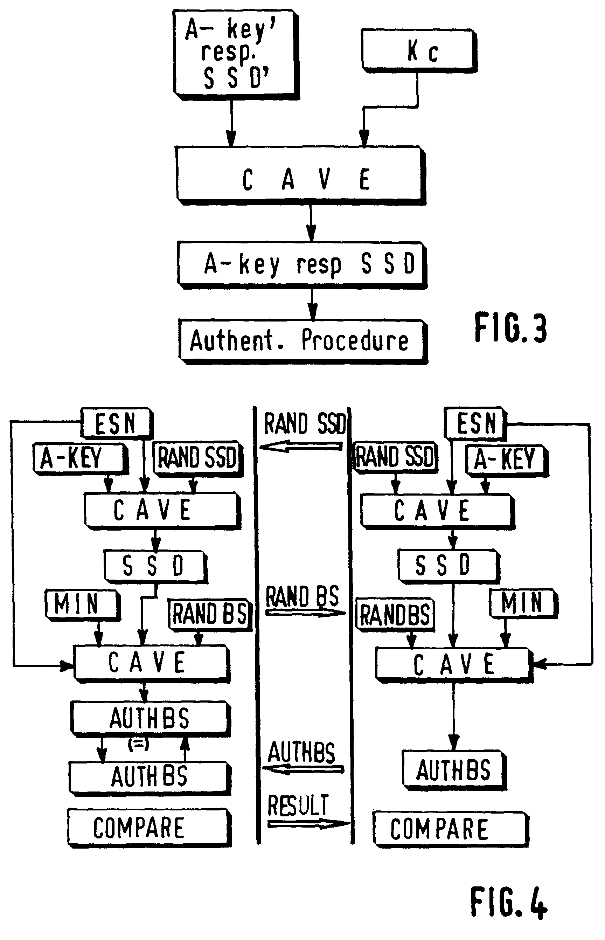

Lorsque la A-key en clair est nécessaire, dans le mobile, pour effectuer une procédure d'authentification, il est prévu, selon l'invention, un programme 62 dans la mémoire progoramme 52, qui extrait la clé cryptée A-key' de l'EEPROM 54, la décrypte, comme représenté à la figure 3, toujours au moyen de la clé constructeur Kc et de l'algorithme CAVE, comme représenté à la figure 3, et la fournit sous sa forme décryptée, A-key, à la station mobile à des fins d'identification, de façon inviolable.

On notera que le numéro d'authentification SSD est le plus souvent utilisé pour les procédures d'authentification. Le SSD est lui-même obtenu par cryptage à partir de la A-key et de l'ESN notamment, de façon à pouvoir le remettre à jour par le truchement d'un nombre aléatoire qui est aussi utilisé lors de ce cryptage particulier, représenté à la figure 4.

La station de base (à droite de la figure) fournit par voie hertzienne un nombre aléatoire, RANDSSD, à la station mobile (à gauche de la figure). Dans chaque station, les mêmes opérations de cryptage suivantes sont alors effectuées :
- cryptage par l'algorithme CAVE de l'association : A-key-ESN-RANDSSD, qui résulte en la clé d'authentification SSD ;
- fourniture par voie hertzienne d'un nombre aléatoire RANDBS de la station mobile à la station de base ;
- puis, pour vérifier que les deux numéros calculés sont bien identiques entre les deux stations, cryptage par l'algorithme CAVE de l'association : ESN-MIN-SSD-RANDBS qui résulte en un numéro AUTHBS ;
- les numéros AUTHBS sont échangés entre station mobile et station de base et comparés, leur identité impliquant aussi l'identité des numéros SSD.

Le numéro SSD ainsi obtenu est ensuite crypté au moyen du programme 62 (figure 1) et mémorisé en un emplacement A2 de la mémoire 54.

De préférence, le programme 61 de la mémoire programme 52 est conçu pour crypter et fournir à la mémoire EEPROM 54 toutes les données qu'elle doit contenir et symétriquement, le programme 62 est conçu pour décrypter chacune de ces données avant de la fournir, sur requête, à la station mobile.

Par ailleurs, le constructeur peut prévoir de modifier périodiquement sa clé secrète Kc qui sert à effectuer le cryptage de données dans la station mobile et dans la station de base.

## Revendications

1. Station mobile de radiotéléphone comportant des moyens de cryptage d'identification et de trafic, un système de protection pour au moins un numéro d'authentification, et des moyens de mémorisation pour mémoriser ledit numéro d'authentification, caractérisé en ce que ledit système de protection comporte des moyens pour crypter, à la mise en service de la station mobile, ledit numéro d'authentification présenté en clair, par lesdits moyens de cryptage d'identification et de trafic, et pour le mémoriser sous cette seule forme cryptée dans lesdits moyens de mémorisation, et pour décrypter selon lesdits moyens de cryptage d'identification et de trafic ledit numéro d'authentification lorsque son utilisation en clair est nécessaire dans la station mobile.

2. Station mobile de radiotéléphone selon la revendication 1 dans laquelle ledit nupméro d'authentification est la clé d'authentification ou A-key en anglais.

3. Station mobile de radiotéléphone selon la revendication 2 dans laquelle un deuxième numéro d'authentification protégé est le SSD ou Shared Secret Data en anglais.

4. Station mobile de radiotéléphone selon l'une des revendications 1 à 3, contenant une clé constructeur secrète qui sert au cryptage et au décryptage, ladite clé étant réservée à une série limitée de stations mobiles à laquelle appartient ladite station mobile.

5. Procédé de protection d'un numéro d'authentification selon l'une des revendications 1 à 4, caractérisé en ce que ledit numéro est crypté par la station mobile de radiotéléphone, puis mémorisé, et décrypté lorsque son utilisation en clair est nécessaire dans la station mobile.
